# FASCICULE DE BREVET EUROPEEN

(11) **EP 3 911 883 B1**
(45) Date de publication et mention de la délivrance du brevet: **17.09.2025**
(21) Numéro de dépôt: 20701148.7
(22) Date de dépôt: 13.01.2020
(51) Int. Cl.: F16L 37/50, F16L 37/252, F16L 37/52

(54) **DISPOSITIF DE RACCORDEMENT FLUIDIQUE**
FLUIDVERBINDER
FLUID CONNECTION DEVICE

(30) Priorité: 15.01.2019 FR 1900367
(43) Date de publication de la demande: 24.11.2021
(73) Titulaire: HUTCHINSON, 75008 Paris (FR)
(72) Inventeur: DONNET, Christophe, 45700 VILLEMANDEUR (FR); DUPONT, Nicolas, 45700 PANNES (FR)
(74) Mandataire: Gevers & Orès
(86) Numéro de dépôt international: PCT/EP2020/050693
(87) Numéro de publication internationale: WO 2020/148232

(56) Documents cités:
- EP-A1- 2 829 784
- WO-A1-2020/201474
- DE-C- 449 339
- FR-A1- 3 059 756

## Description

### Domaine technique de l'invention

La présente invention concerne un dispositif de raccordement fluidique par exemple pour un véhicule automobile, notamment pour des circuits de fluide installés dans le compartiment moteur (par exemple des circuits d'air ou d'eau) ou sous la caisse d'un véhicule (par exemple un circuit de carburant ou un circuit « SCR » de réduction catalytique sélective). En variante, il pourrait être utilisé dans un autre domaine par exemple aéronautique, marine, etc.

### Arrière-plan technique

L'arrière-plan technique comprend notamment le document EP-A1-2 829 784.

Un dispositif de raccordement fluidique, du type connectique rapide, a pour but de connecter deux interfaces ou raccords entre eux d'une manière étanche, simple, précise et fiable. Cette opération doit être réalisée en quelques secondes et de préférence sans outillage spécifique.

Un dispositif de ce type comprend notamment deux raccords tubulaires, respectivement mâle et femelle, destinés à être emboîtés l'un dans l'autre. Le dispositif est complété par un joint annulaire qui assure une étanchéité du raccordement.

Un dispositif de raccordement doit de préférence laisser au moins un degré de liberté entre les raccords pour permettre notamment de rattraper des jeux de montage. Dans la technique actuelle, les solutions proposées nécessitent l'utilisation de nombreuses pièces et ne permettent pas toujours un degré de liberté avec un débattement suffisant ou une capacité de déplacement suffisante.

La présente invention propose un perfectionnement à cette technologie, qui répond de manière simple, efficace et économique au besoin précité.

### Résumé de l'invention

L'invention propose à cet effet un dispositif de raccordement fluidique comportant les caractéristiques de la revendication 1.

Le dispositif selon l'invention peut ainsi comprendre seulement trois pièces à savoir les raccords et un joint, ce qui simplifie le dispositif et limite son encombrement. Le dispositif est équipé de deux types de fixation, par encliquetage élastique et par baïonnette. L'encliquetage est irréversible de façon à ce que le dispositif soit indémontable sans risque de l'endommager. Cela évite un risque de démontage accidentel du dispositif en fonctionnement mais aussi lors du transport et de la manutention des pièces équipées de tels dispositifs. Dans le cas où un tuyau serait équipé d'un dispositif préassemblé, ce préassemblage serait assuré jusqu'au montage du tuyau par exemple sur un moteur ou véhicule quelconque, et assurerait une étanchéité post montage.

Dans la présente demande, on entend par une « détérioration » d'une pièce, le fait de découper ou d'usiner la pièce, ou de la déformer plastiquement ou la rompre.

Le dispositif selon l'invention peut comprendre une ou plusieurs des caractéristiques suivantes, prises isolément les unes des autres ou en combinaison les unes avec les autres :
- les raccords sont configurés pour conserver après fixation au moins un degré de liberté choisi parmi une translation le long de l'axe X sur une distance prédéterminée, une rotation autour de l'axe X sur un angle prédéterminé, et une articulation par rapport à un point situé sur l'axe X et avec un débattement angulaire prédéterminé ;
- les organes sont en saillie sur une surface annulaire externe du raccord mâle ;
- chacun des organes comprend une surface radialement externe présentant une pente inclinée en direction circonférentielle par rapport à l'axe X ;
- la surface radialement externe comprend une première extrémité circonférentielle située sur une circonférence de diamètre D1 et une seconde extrémité circonférentielle opposée située sur une circonférence de diamètre D2, qui est inférieure à D1, chacun des organes comportant une surface latérale de butée située du côté de ladite première extrémité circonférentielle ;
- le raccord mâle comprend en outre des patins en saillie sur sa surface annulaire externe et configurés pour coopérer par glissement avec une surface annulaire interne du raccord femelle ;
- les patins et les organes sont situés sensiblement dans un même plan transversal à l'axe X, le nombre de patins étant égal au nombre d'organes et chaque patin étant disposé entre deux organes adjacents ;
- la première fente est reliée à une seconde fente axiale pour assurer un degré de liberté en translation axiale du raccord mâle dans le raccord femelle ;
- dans la zone de liaison de chaque fenêtre à la fente circonférentielle correspondante, le raccord femelle comprend une paroi comportant une surface radialement interne présentant une pente inclinée en direction circonférentielle par rapport à l'axe X ;
- la surface radialement interne comprend une première extrémité circonférentielle située sur une circonférence de diamètre D3 et une seconde extrémité circonférentielle opposée située sur une circonférence de diamètre D4, qui est supérieure à D3, la paroi comportant une surface latérale de butée située du côté de ladite première extrémité circonférentielle ;
- la paroi est formée par une patte circonférentielle élastiquement déformable en direction radiale ;
- les fentes et/ou fenêtres sont non réparties régulièrement autour dudit axe X pour conférer au raccord femelle une propriété de détrompage ;
- le raccord mâle est formé d'une seule pièce, le raccord femelle est formé d'une seule pièce, et le dispositif est constitué du raccord mâle, du raccord femelle et dudit au moins un joint ;
- le raccord mâle comprend une rainure annulaire de logement du joint annulaire, cette rainure annulaire étant formée dans un bossage annulaire qui s'étend autour de l'axe X et qui a en section une forme arrondie convexe conférant au raccord mâle une aptitude à rotuler dans le raccord femelle.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique en perspective éclatée d'un dispositif de raccordement fluidique selon l'invention ;
[Fig.2] la figure 2 est une vue schématique de face d'un raccord mâle du dispositif de la figure 1 ;
[Fig.3] la figure 3 est une vue de détail à plus grande échelle d'une partie du raccord mâle du dispositif de la figure 1 ;
[Fig.4] la figure 4 est une vue schématique de face d'un raccord femelle du dispositif de la figure 1 ;
[Fig.5] la figure 5 est une vue de détail à plus grande échelle d'une partie du raccord femelle du dispositif de la figure 1 ;
[Fig.6] la figure 6 est une vue schématique en perspective du dispositif de la figure 1, après engagement du raccord mâle dans le raccord femelle par translation axiale du raccord mâle dans le raccord femelle ;
[Fig.7] la figure 7 est une vue schématique partielle en coupe transversale d'un organe d'encliquetage élastique du raccord mâle, dans une position préalable à sa coopération par encliquetage élastique avec une patte du raccord femelle ;
[Fig.8] la figure 8 est une vue schématique en perspective du dispositif de la figure 1, après rotation du raccord mâle dans le raccord femelle ;
[Fig.9] la figure 9 est une vue schématique partielle en coupe transversale d'un organe d'encliquetage élastique du raccord mâle, dans une position suite à sa coopération par encliquetage élastique avec une patte du raccord femelle ;
[Fig.10] la figure 10 est une vue schématique en coupe axiale du dispositif de la figure 8, le plan de coupe passant par les organes d'encliquetage élastique du raccord mâle ;
[Fig.11] la figure 11 est une vue schématique en perspective du dispositif de la figure 1, après une nouvelle translation du raccord mâle dans le raccord femelle ;
[Fig.12a] la figure 12a est une vue similaire à celle de la figure 10 dans le cas où les raccords sont dans la position de la figure 11 ;
[Fig.12b] la figure 12b est une autre vue similaire à celle de la figure 10 dans le cas où les raccords sont dans la position de la figure 11 et sont inclinés l'un par rapport à l'autre ; et
[Fig.13] la figure 13 est une vue schématique en perspective d'un conduit équipé de deux dispositifs selon l'invention.

### Description détaillée de l'invention

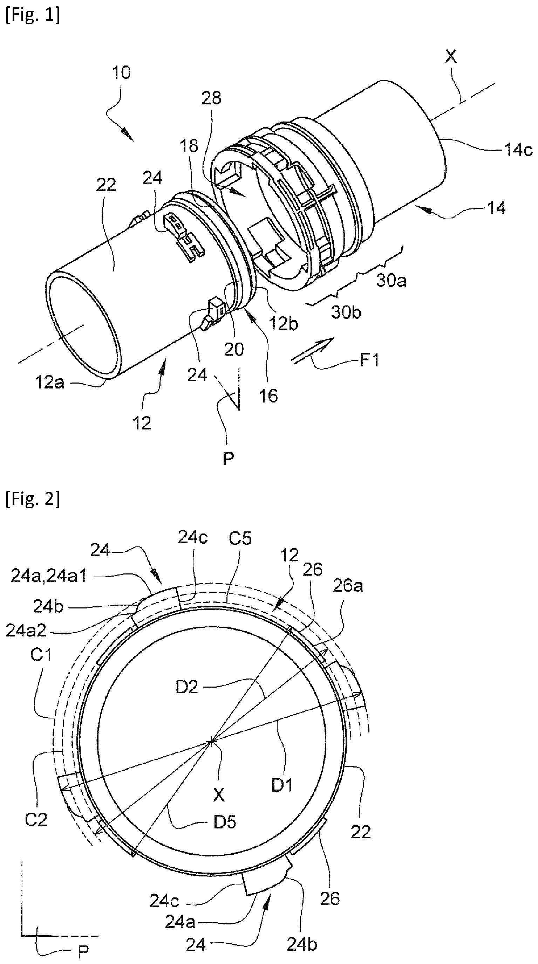

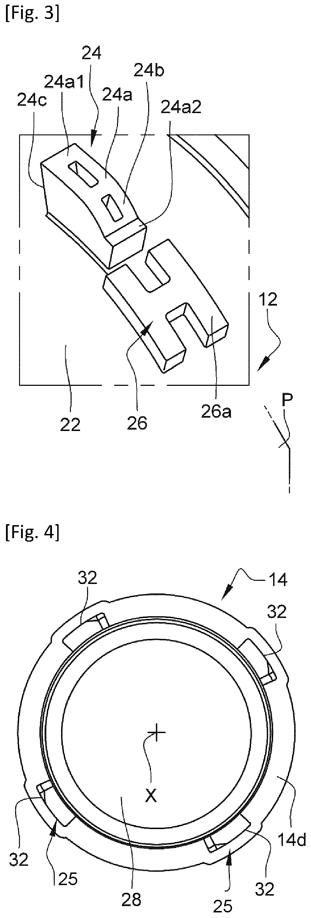

Les figures 1 à 13 illustrent un mode de réalisation d'un dispositif 10 de raccordement fluidique selon l'invention, par exemple pour un circuit de fluide d'un véhicule automobile. Cette application n'est toutefois pas limitative.

Le dispositif 10 comprend essentiellement trois pièces à savoir un raccord mâle 12, un raccord femelle 14, et au moins un joint annulaire 16 par exemple torique.

Les raccords 12 et 14 sont destinés à être emboîtés l'un dans l'autre et à être solidaires chacun d'un tuyau ou composant à raccorder.

Ces pièces vont être décrites les unes après les autres dans ce qui suit, puis leur coopération mutuelle et la fixation des raccords 12, 14 seront décrites.

### -> Raccord mâle 12

Le raccord mâle 12 a une forme tubulaire d'axe X. Il est destiné à être engagé au moins en partie dans le raccord femelle 14 et comprend une extrémité axiale 12a de solidarisation à un tuyau ou un composant, comme évoqué dans ce qui précède.

Dans l'exemple représenté, le raccord mâle 12 porte le joint 16. Le joint 16 est logé dans une rainure annulaire externe 18 du raccord 12. La rainure 18 est ici formée dans un bossage annulaire externe 20 du raccord mâle 12, qui est situé au niveau de l'extrémité axiale 12b opposée de ce raccord 12. Le bossage 20 est en saillie sur une surface cylindrique externe 22 du raccord 12 (figure 1).

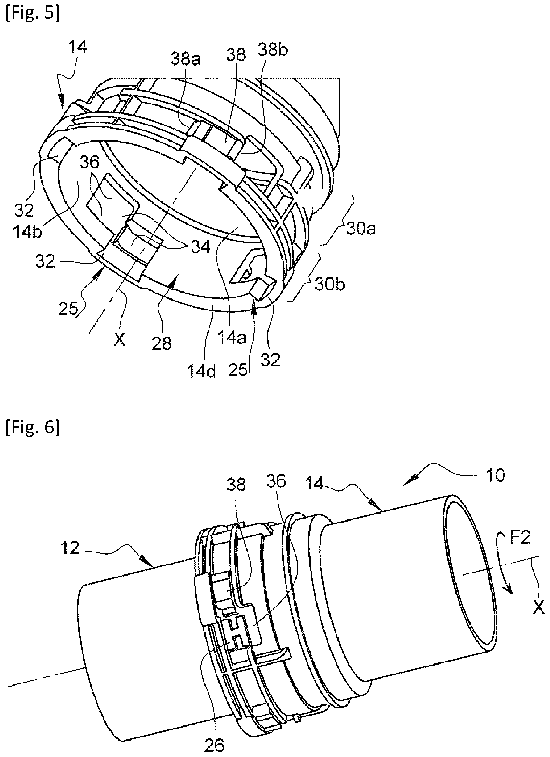

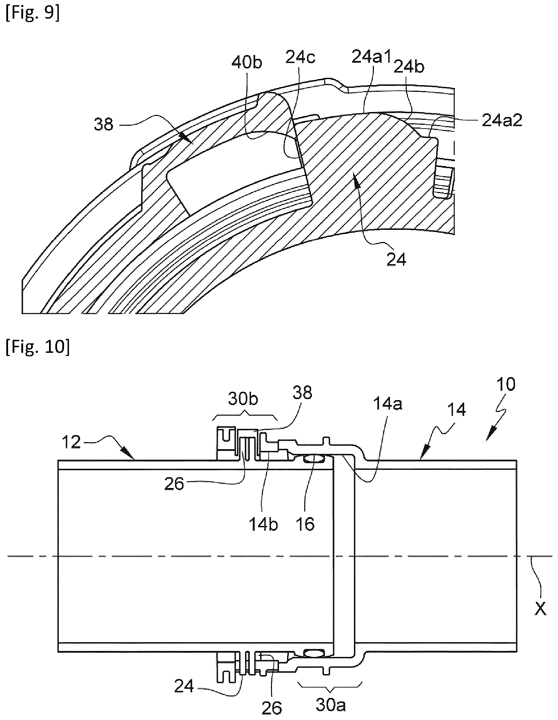

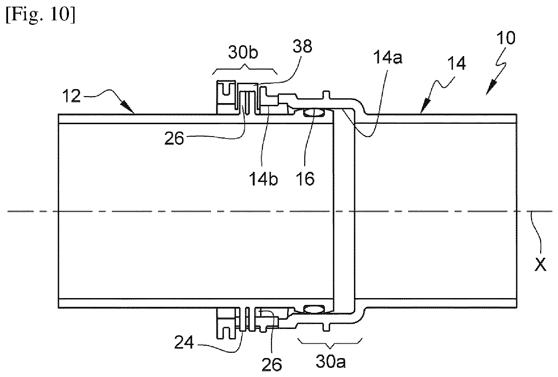

Le bossage 20 s'étend autour de l'axe X et a en section axiale une forme générale arrondie convexe de façon à définir une portion de surface sphérique. Cette surface sphérique est configurée pour coopérer par glissement avec une surface interne 14a, de préférence cylindrique du raccord femelle 14 de façon à conférer au raccord 12 une aptitude à rotuler dans le raccord 14, comme cela sera décrit plus en détail dans ce qui suit (figures 5 et 10).

Le raccord 12 comprend en outre des organes 24 configurés pour coopérer par encliquetage élastique avec des éléments 25 complémentaires du raccord femelle 14.

Dans l'exemple représenté, les organes 24 sont formés par des plots qui ont par exemple une forme générale parallélépipédique et qui sont formés en saillie sur la surface 22. Ils sont ici au nombre de quatre et sont régulièrement répartis autour de l'axe X. Ils sont situés sensiblement dans un même plan P perpendiculaire à l'axe, et situé entre les extrémités 12a, 12b.

Chaque organe 24 ou plot comprend une surface radialement externe 24a qui est libre et qui présente une pente 24b orientée en direction circonférentielle par rapport à l'axe X. La surface 24a présente deux plateaux 24a1, 24a2 séparés l'un de l'autre par la pente 24b.

Le plateau 24a1 s'étend entre une première extrémité circonférentielle de l'organe et la pente 24b, cette extrémité circonférentielle étant située sur une circonférence C1 centrée sur l'axe X, qui a un diamètre D1. Le plateau 24a1 s'étend de manière sensiblement tangente par rapport à cette circonférence C1.

Le plateau 24a2 s'étend entre la pente 24b et une seconde extrémité circonférentielle de l'organe, cette seconde extrémité étant située sur une circonférence C2 centrée sur l'axe X, qui a un diamètre D2 qui est inférieur à D1. Le plateau 24a2 s'étend de manière sensiblement tangente par rapport à cette circonférence C2. Par ailleurs, le plateau 24a2 a une étendue circonférentielle autour de l'axe X qui est inférieure à celle du plateau 24a1.

Chaque organe 24 comprend en outre une surface latérale de butée 24c qui s'étend radialement entre la surface 22 et la première extrémité circonférentielle de cet organe (et en particulier entre la surface 22 et le plateau 24a1).

Le raccord mâle 12 comprend par ailleurs des patins 26 en saillie sur la surface 22. Les patins 26 sont au nombre de quatre dans l'exemple représenté et sont régulièrement répartis autour de l'axe X. Ils sont par exemple situés dans le plan P précité et chaque patin 26 peut être disposé entre deux organe 24 ou plots adjacents.

Comme on le voit dans les dessins, chaque patin 26 peut former un H, bien que ceci ne soit pas limitatif. Chaque patin 26 comprend une surface radialement externe 26a d'appui et de glissement sur une surface interne 14b, de préférence cylindrique, du raccord femelle 14 (figures 5 et 10). Cette surface 26a est située sur une circonférence C5 de diamètre D5.

Le raccord mâle 12 est de préférence formé d'une seule pièce, comme dans l'exemple représenté.

Le raccord mâle 12 est par exemple réalisé en polyamide ou aluminium.

### -> Raccord femelle 14

Le raccord femelle 14 a une forme tubulaire d'axe X. Il comprend également une extrémité axiale 14c de solidarisation à un tuyau ou un composant, comme évoqué dans ce qui précède.

Le raccord femelle 14 est conformé pour s'étendre autour du raccord mâle 12 et comprend donc une ouverture 28 adaptée à la forme et aux dimensions du raccord mâle 12 afin de le recevoir par engagement mâle-femelle.

Dans l'exemple représenté, le raccord femelle 14 comprend deux tronçons coaxiaux 30a, 30b. Un premier tronçon 30a, de plus petit diamètre, est situé du côté de l'extrémité 14c et comprend la surface interne 14a précitée. Un second tronçon 30b, de plus grand diamètre, est situé du côté opposé à l'extrémité 14c et comprend la surface interne 14b. La surface interne 14a a donc un diamètre inférieur à celui de la surface interne 14b dans l'exemple représenté.

Du côté opposé à l'extrémité 14c, le raccord femelle 14 comprend un bord périphérique 14d délimitant l'ouverture 28 et comportant des fenêtres 32 de passage axial des organes 24 du raccord mâle 12 (figure 5). Chaque fenêtre 32 a une orientation parallèle à l'axe X et ici a en section transversale une forme générale en U inversé dans la mesure où, en plus d'être traversante axialement, elle débouche radialement vers l'intérieur par rapport à l'axe X.

Comme on le voit dans les dessins, chaque fenêtre 32 est formée dans le tronçon 30b et peut être assimilée à une encoche axiale formée dans la surface 14b.

Le raccord femelle 14 comprend en outre des fentes pour la fixation par effet baïonnette du raccord mâle 12 dans le raccord femelle 14.

Chaque fenêtre 32 est reliée à son extrémité axiale située du côté opposé au bord 14d, à une première extrémité circonférentielle d'une première fente 34 qui s'étend circonférentiellement autour de l'axe X et qui est donc une fente circonférentielle. La seconde extrémité circonférentielle de cette fente 34 est quant à elle reliée à une première extrémité axiale d'une seconde fente 36 qui s'étend le long de l'axe X et qui est donc une fente axiale. La seconde extrémité axiale de cette fente 36 est située du côté de l'extrémité 14c. L'association entre deux fentes 34, 36 reliées entre elles forme sensiblement un L. L'association entre les deux fentes 34, 36 et la fenêtre 32 associée forme sensiblement un Z (figure 5).

Les dessins permettent de constater que les fentes 36 ne comprennent pas de plafond, dans la mesure où elles sont traversantes en direction radiale. La portion de chaque fente 34, qui est reliée à la fente 36 correspondante, ne présente pas non plus de plafond. Toutefois, l'autre portion de chaque fente 34, qui est reliée à la fenêtre 32 correspondante, comprend une paroi de plafond (radialement externe). Cette portion de la fente 34 débouche ainsi radialement vers l'intérieur mais pas vers l'extérieur.

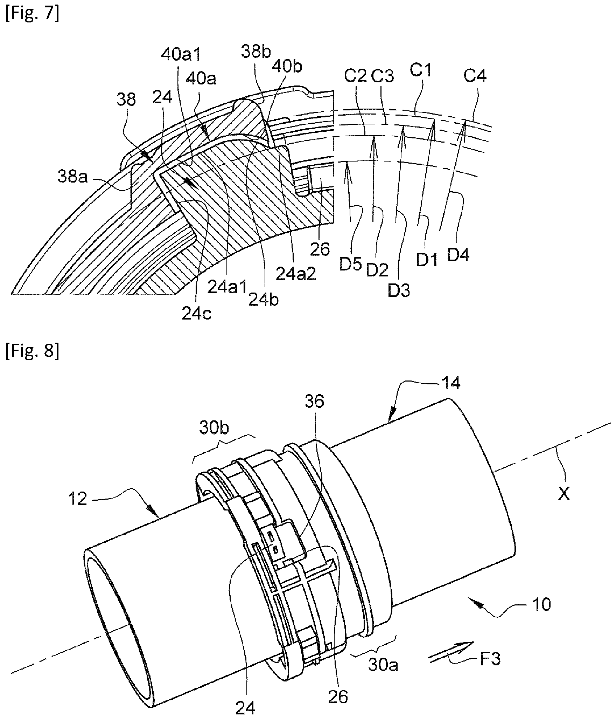

Dans l'exemple représenté, cette paroi de plafond est formée par une patte 38 élastiquement déformable en flexion. Chaque patte 38 a une forme générale allongée en direction circonférentielle et comprend une première extrémité circonférentielle 38a reliée au reste du raccord 14, et une seconde extrémité circonférentielle 38b libre qui est située du côté de la fente 36 et qui est apte à se déformer en direction radiale (figure 7).

La figure 7 permet de mieux apprécier la forme de la patte 38. La patte 38 comprend une surface interne 40a qui présente un plateau 40a1 et une pente 40b orientée en direction circonférentielle. Le plateau 40a1 s'étend entre l'extrémité 38a et la pente 40b, cette pente 40b étant située au niveau de l'extrémité 38b.

Le plateau 40a1 a une orientation sensiblement tangente à une circonférence C4 centrée sur l'axe X et ayant un diamètre D4. La pente 40b forme à l'extrémité 38b une dent orientée radialement vers l'intérieur et dont l'extrémité radialement interne est située sur une circonférence C3 ayant un diamètre interne D3. Dans l'exemple représenté, D4 est supérieur à D1, D2 et D3. D3 est inférieur à D1 et supérieur à D2.

On va maintenant décrire l'assemble et la fixation des raccords 12, 14.

La figure 1 montre une première étape d'assemblage des raccords 12, 14 dans laquelle ils sont alignés axialement et prêts à être engagés axialement l'un dans l'autre (flèche F1). Pour cela, les organes 24 ou plots du raccord mâle 12 sont alignés axialement avec les fenêtres 32 du raccord femelle 14. Les organes 24 ont des dimensions, en particulier radialement et circonférentiellement, qui sont prévues pour qu'ils puissent être engagés dans les fenêtres 32 et les traverser pour atteindre les fentes 34.

Dans l'exemple représenté, les organes 24, les fenêtres 32 et les fentes 34 sont régulièrement espacés autour de l'axe X. En variante, cela pourrait ne pas être le cas afin de conférer aux raccords une propriété de détrompage. Parmi les quatre organes 24 par exemple, trois pourraient être répartis à 90° les uns des autres, et le dernier pourrait être à 120° de l'un et 60° d'un autre. Cette disposition particulière permettrait d'indiquer à un opérateur une position angulaire nécessaire de l'un des raccords par rapport à l'autre des raccords pour autoriser l'engagement de l'un dans l'autre.

A la fin de cet engagement par translation axiale du raccord mâle 12 dans le raccord femelle 14, les organes 24 se trouvent radialement à l'intérieur des pattes 38 (figures 6 et 7) et les patins 26 se retrouvent à l'intérieur du tronçon 30b, au niveau des fentes 36 (figure 6). Le diamètre D5 des patins 26 est inférieur au diamètre de la surface 14b pour autoriser ce montage ainsi que l'aptitude précitée de rotulage des raccords 12, 14.

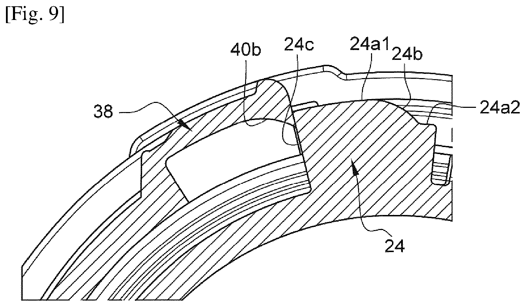

La figure 6 et sa flèche F2 montre une autre étape de montage dans laquelle le raccord mâle 12 est mis en rotation autour de l'axe X à l'intérieur du raccord femelle, d'un angle déterminé (par exemple de l'ordre de 20°), ici dans le sens horaire, pour que les organes 24 passent des fentes 34 aux fentes 36. Lors de ce passage, ils coopèrent par encliquetage élastique avec les pattes 38, ce qui se traduit par : la mise en appui et le glissement circonférentiels des pentes 24b, 40b les unes sur les autres, la déformation élastique des pattes radialement vers l'extérieur et le glissement des dents de pattes 38 sur les pentes 24b et les plateaux 24a1 des organes 24, et enfin le retour élastique des pattes 38 et des dents afin que celles-ci puissent prendre appui sur les surfaces latérales 24c (figure 9).

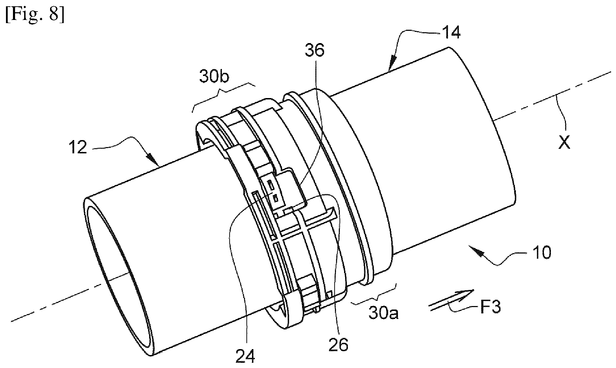

A la fin de cette rotation du raccord mâle 12 dans le raccord femelle 14, les organes 24 se trouvent dans les fentes 36 et les patins 26 se retrouvent à l'intérieur de la surface 14a du tronçon 30b (figure 8).

La figure 10 montre les positions des organes 24 et des patins 26 à l'intérieur du tronçon 30b du raccord femelle 14. Le joint 16 porté par le raccord 12 coopère à étanchéité avec la surface 14b du tronçon 30a du raccord 14. Les patins 26 sont aptes à prendre appui sur la surface 14b du tronçon 30b du raccord 14.

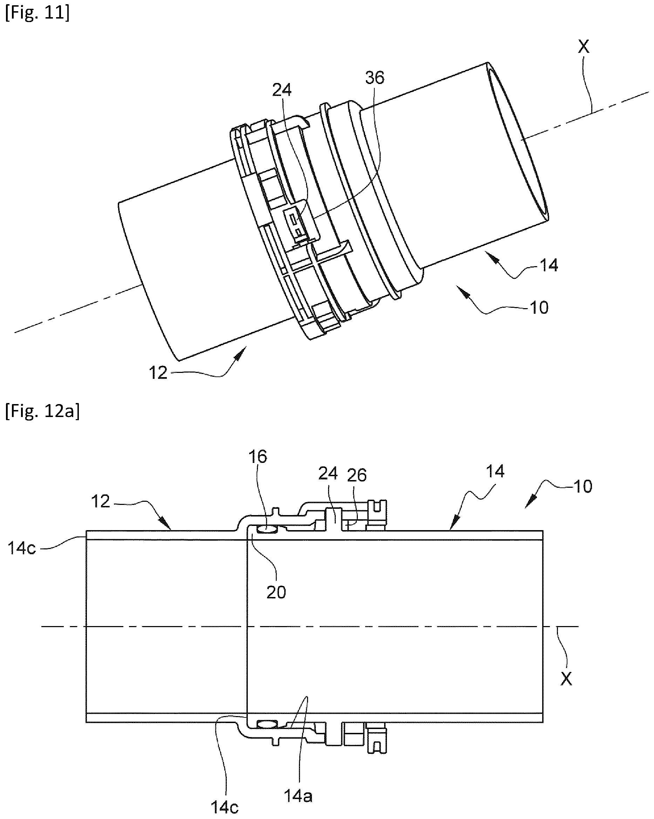

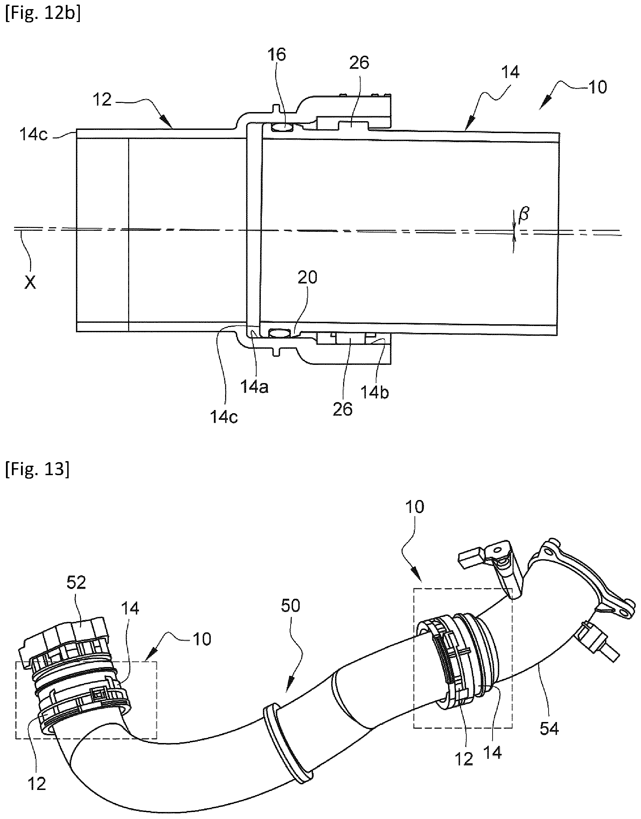

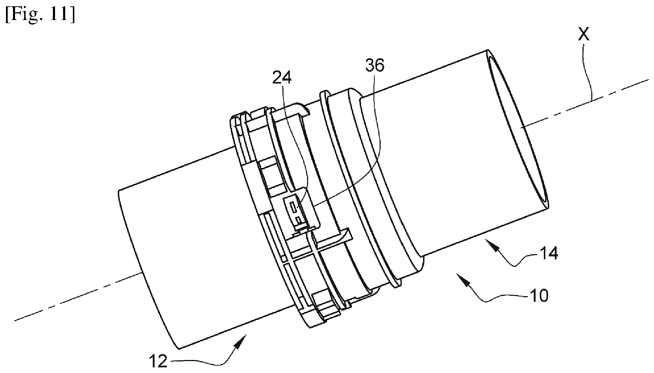

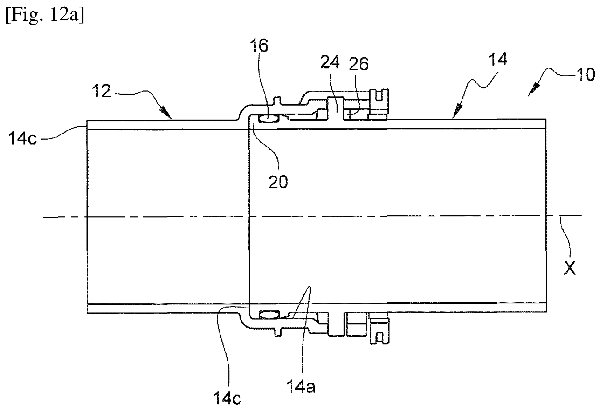

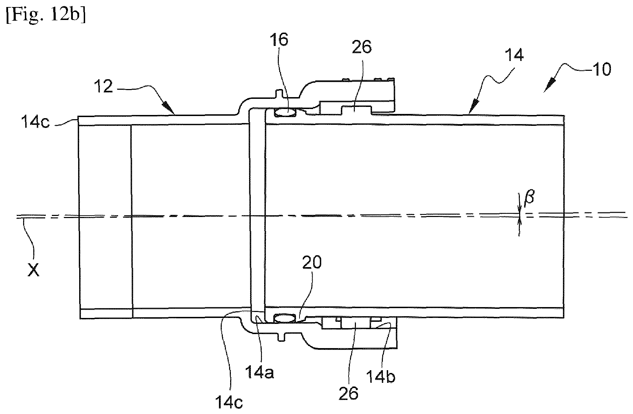

La figure 8 et sa flèche F3 montre au moins un des degrés de liberté du raccordement au montage ou en fonctionnement, le raccord mâle 12 étant apte à être déplacé en translation le long de l'axe X à l'intérieur du raccord femelle 14. Ceci est rendu possible par le fait que les fentes 36 ont chacune une dimension axiale supérieure à la dimension axiale de l'organe 24 correspondant. Chaque organe 24 peut donc se déplacer en translation axiale dans la fente 36 associée et adopter une position avancée visible aux figures 11 et 12.

Cette aptitude est notamment importante pour conférer au raccord mâle 12 la possibilité de rotuler dans le raccord femelle 14. Lors de ce déplacement représenté schématiquement aux figures 12a et 12b par l'angle β, le bossage 20 glisse sur la surface interne 14a. La surface 14a coopère avec le joint 16 et est une surface d'étanchéité. Les patins 26 coopèrent avec la surface 14b qui limite l'angle β de rotulage des raccords, cet angle étant par exemple +/-15°, de préférence +/-10°, et plus préférentiellement +/-5°. Dans la mesure où ce rotulage reviendrait à pivoter le raccord mâle 12 par rapport au raccord femelle 14 dans un plan passant par l'axe X, un premier des organes 24 qui serait dans ce plan serait déplacé vers l'extrémité 14c du raccord femelle dans la fente 36, et l'autre de ces organes 24, diamétralement opposé au premier organe, serait déplacé du côté opposé.

La course axiale entre les raccords 12, 14, en position fixée, peut être définie par butée des organes 24 contre les bords des fentes 36. Elle peut également être limitée par butée de l'extrémité 12b du raccord mâle 12 sur un épaulement annulaire interne du raccord femelle 14. Elle est par exemple de +/-20mm, de préférence +/-10mm, et plus préférentiellement +/-6mm.

Le débattement angulaire entre les raccords 12, 14, autour de l'axe X et après fixation, peut être définie par butée des organes 24 contre les bords des fentes 36. Ce débattement est par exemple de +/-15°, de préférence +/-10°, et plus préférentiellement +/-5°.

Par ailleurs, le raccord mâle 12 peut rotuler dans le raccord femelle 14, comme évoqué dans ce qui précède.

Les débattements angulaires et les courses de déplacement des raccords l'un par rapport à l'autre permettent notamment de compenser les tolérances de fabrication des pièces. A titre d'exemple, dans le cas où les tolérances de fabrication des pièces engendreraient un risque de défaut de positionnement angulaire des raccords de 3° autour de l'axe X, il suffirait de prévoir un débattement angulaire de +/-5° autour de cet axe pour compenser ces tolérances de fabrication.

Comme on le voit dans les dessins, et en particulier figure 9, la surface 24c de chaque organe 24 peut venir en appui sur la dent de la patte 38 et ne peut pas revenir sous cette patte 38, ce qui fait que l'encliquetage élastique est ici irréversible.

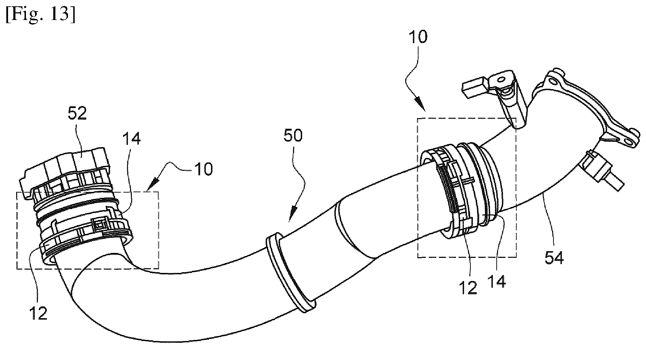

La figure 13 montre un exemple d'utilisation d'un dispositif 10 selon l'invention et en particulier de deux dispositifs 10, un tuyau 50 étant équipé à chacune de ses extrémités longitudinales d'un dispositif 10 pour son raccordement à deux embouts 52, 54. Le tuyau 50 est par exemple solidaire des raccords mâles 12 des deux dispositifs et les embouts sont par exemple solidaires respectivement des raccords femelles 14 de ces dispositifs 10.

La solidarisation des raccords sur le tuyau 50 peut être réalisé de différentes manières. Un raccord peut par exemple être formé d'une seule pièce avec le tuyau. En variante, le raccord peut être rapporté et fixé à demeure, par exemple par soudage, sur le tuyau, ou bien peut être fixé de manière démontable au tuyau. Les extrémités 12a, 14c des raccords peuvent être adaptées en conséquence.

## Revendications

1. Dispositif (10) de raccordement fluidique, comportant :
- un raccord mâle (12) et un raccord femelle (14), qui sont configurés pour être emboîtés l'un dans l'autre le long d'un axe X de façon à réaliser un raccordement fluidique,
- au moins un joint annulaire (16) porté par l'un des raccords et configuré pour coopérer avec l'autre des raccords afin d'assurer une étanchéité entre les raccords,
les raccords étant configurés pour être fixés l'un à l'autre par encliquetage élastique et pour conserver après fixation au moins un degré de liberté l'un vis-à-vis de l'autre,
le raccord mâle (12) comprenant des organes (24) configurés pour coopérer par baïonnette avec des éléments (25) complémentaires du raccord femelle (14),
le raccord femelle (14) comprenant une ouverture (28) d'engagement du raccord mâle (12), cette ouverture étant délimitée par un bord annulaire périphérique (14d) comportant des fenêtres axiales (32) d'engagement des organes (24) du raccord mâle (12) par translation axiale, chaque fenêtre (32) étant reliée à une première fente circonférentielle (34) apte à recevoir l'organe (24) correspondant lors d'un déplacement circonférentiel du type baïonnette du raccord mâle (12) dans le raccord femelle (14),
**caractérisé en ce que** les mêmes organes (24) du raccord mâle (12) coopèrent par encliquetage élastique avec les mêmes éléments (25) du raccord femelle (14) de façon ce que les raccords soient fixés ensemble par une double fixation par encliquetage élastique et par baïonnette, l'encliquetage élastique étant configuré pour être irréversible sans détérioration de façon à ce que, après fixation, le dispositif soit indémontable sans détérioration.

2. Dispositif (10) selon la revendication 1, dans lequel les raccords (12, 14) sont configurés pour conserver après fixation au moins un degré de liberté choisi parmi une translation le long de l'axe X sur une distance prédéterminée, une rotation autour de l'axe X sur un angle prédéterminé, et une articulation par rapport à un point situé sur l'axe X et avec un débattement angulaire prédéterminé.

3. Dispositif (10) selon l'une des revendications précédentes, dans lequel les organes (24) sont en saillie sur une surface annulaire externe (22) du raccord mâle (12).

4. Dispositif (10) selon la revendication 3, dans lequel chacun des organes (24) comprend une surface radialement externe (24a) présentant une pente (24b) inclinée en direction circonférentielle par rapport à l'axe X.

5. Dispositif (10) selon la revendication 4, dans lequel la surface radialement externe (24a) comprend une première extrémité circonférentielle située sur une circonférence (C1) de diamètre D1 et une seconde extrémité circonférentielle opposée située sur une circonférence (C2) de diamètre D2, qui est inférieure à D1, chacun des organes (24) comportant une surface latérale de butée (24c) située du côté de ladite première extrémité circonférentielle.

6. Dispositif (10) selon l'une des revendications 3 à 5, dans lequel le raccord mâle (12) comprend en outre des patins (26) en saillie sur sa surface annulaire externe (22) et configurés pour coopérer par glissement avec une surface annulaire interne (14b) du raccord femelle (14).

7. Dispositif (10) selon l'une des revendications précédentes, dans lequel la première fente (34) est reliée à une seconde fente axiale (36) pour assurer un degré de liberté en translation axiale du raccord mâle (12) dans le raccord femelle (14).

8. Dispositif (10) selon l'une des revendications précédentes, dans lequel, dans la zone de liaison de chaque fenêtre (32) à la fente circonférentielle (34) correspondante, le raccord femelle (14) comprend une paroi comportant une surface radialement interne (40a) présentant une pente (40b) inclinée en direction circonférentielle par rapport à l'axe X.

9. Dispositif (10) selon la revendication 9, dans lequel la surface radialement interne (40a) comprend une première extrémité circonférentielle située sur une circonférence (C3) de diamètre D3 et une seconde extrémité circonférentielle opposée située sur une circonférence (C4) de diamètre D4, qui est supérieure à D3, la paroi comportant une surface latérale de butée située du côté de ladite première extrémité circonférentielle.

10. Dispositif selon l'une des revendications précédentes, dans lequel les fenêtres (32) sont non réparties régulièrement autour dudit axe X pour conférer au raccord femelle (14) une propriété de détrompage.

11. Dispositif (10) selon l'une des revendications précédentes, dans lequel le raccord mâle (12) est formé d'une seule pièce, le raccord femelle (14) est formé d'une seule pièce, et le dispositif est constitué du raccord mâle, du raccord femelle et dudit au moins un joint (16).

12. Dispositif (10) selon l'une des revendications précédentes, dans lequel le raccord mâle (12) comprend une rainure annulaire (18) de logement du joint annulaire, cette rainure annulaire étant formée dans un bossage annulaire (20) qui s'étend autour de l'axe X et qui a en section une forme arrondie convexe conférant au raccord mâle une aptitude à rotuler dans le raccord femelle (14).

## Patentansprüche

1. Fluidanschlussvorrichtung (10), umfassend:
- ein männliches Anschlussstück (12) und ein weibliches Anschlussstück (14), die so konfiguriert sind, dass sie entlang einer X-Achse ineinandergesteckt werden können, um einen Fluidanschluss herzustellen,
- mindestens eine ringförmige Dichtung (16), die von einem der Anschlussstücke getragen wird und so konfiguriert ist, dass sie mit dem anderen der Anschlussstücke zusammenwirkt, um eine Dichtigkeit zwischen den Anschlussstücken zu gewährleisten,
wobei die Anschlussstücke so konfiguriert sind, dass sie durch elastisches Verrasten aneinander befestigt werden können und nach Befestigung mindestens einen Freiheitsgrad zueinander beibehalten,
wobei das männliche Anschlussstück (12) Organe (24) umfasst, die so konfiguriert sind, dass sie mit komplementären Elementen (25) des weiblichen Anschlussstücks (14) als Bajonettverschluss zusammenwirken,
wobei das weibliche Anschlussstück (14) eine Öffnung (28) zum Ineingriffnehmen des männlichen Anschlussstücks (12) umfasst, wobei diese Öffnung durch einen ringförmigen umlaufenden Rand (14d) begrenzt ist, der axiale Fenster (32) zum Ineingriffnehmen der Organe (24) des männlichen Anschlussstücks (12) durch axiale Verschiebung umfasst, wobei jedes Fenster (32) mit einem ersten Umfangsschlitz (34) verbunden ist, der in der Lage ist, das entsprechende Organ (24) bei einer bajonettartigen Verlagerung des männlichen Anschlussstücks (12) in Umfangsrichtung in dem weiblichen Anschlussstück (14) aufzunehmen,
**dadurch gekennzeichnet, dass** dieselben Organe (24) des männlichen Anschlussstücks (12) durch elastisches Verrasten mit denselben Elementen (25) des weiblichen Anschlussstücks (14) zusammenwirken, sodass die Anschlussstücke durch eine doppelte Befestigung durch elastisches Verrasten und durch Bajonettverschluss aneinander befestigt werden, wobei die elastische Verrastung so konfiguriert ist, dass sie ohne Beschädigung irreversibel ist, sodass die Vorrichtung nach Befestigung ohne Beschädigung nicht mehr auseinandergebaut werden kann.

2. Vorrichtung (10) nach Anspruch 1, wobei die Anschlussstücke (12, 14) so konfiguriert sind, dass sie nach Befestigung mindestens einen Freiheitsgrad beibehalten, ausgewählt aus einer Verschiebung entlang der X-Achse um einen vorbestimmten Abstand, einer Drehung um die X-Achse um einen vorbestimmten Winkel und eine Gelenkbewegung in Bezug auf einen Punkt, der sich auf der X-Achse befindet, und mit einem vorbestimmten Winkelausschlag.

3. Vorrichtung (10) nach einem der vorstehenden Ansprüche, wobei die Organe (24) an einer äußeren ringförmigen Fläche (22) des männlichen Anschlussstücks (12) vorspringen.

4. Vorrichtung (10) nach Anspruch 3, wobei jedes der Organe (24) eine radial äußere Fläche (24a) umfasst, die eine in Bezug auf die X-Achse in Umfangsrichtung geneigte Schräge (24b) aufweist.

5. Vorrichtung (10) nach Anspruch 4, wobei die radial äußere Fläche (24a) ein erstes Umfangsende, das sich auf einem Umfang (C1) mit Durchmesser D1 befindet, und ein zweites gegenüberliegendes Umfangsende umfasst, das sich auf einem Umfang (C2) mit Durchmesser D2 befindet, der kleiner ist als D1, wobei jedes der Organe (24) eine seitliche Anschlagfläche (24c) umfasst, die sich auf der Seite des ersten Umfangsendes befindet.

6. Vorrichtung (10) nach einem der Ansprüche 3 bis 5, wobei das männliche Anschlussstück (12) weiter Kufen (26) umfasst, die an seiner äußeren ringförmigen Fläche (22) vorspringen und so konfiguriert sind, dass sie gleitend mit einer inneren ringförmigen Fläche (14b) des weiblichen Anschlussstücks (14) zusammenwirken.

7. Vorrichtung (10) nach einem der vorstehenden Ansprüche, wobei der erste Schlitz (34) mit einem zweiten axialen Schlitz (36) verbunden ist, um einen axialen Verschiebefreiheitsgrad des männlichen Anschlussstücks (12) im weiblichen Anschlussstück (14) zu gewährleisten.

8. Vorrichtung (10) nach einem der vorstehenden Ansprüche, wobei im Verbindungsbereich jedes Fensters (32) mit dem entsprechenden Umfangsschlitz (34) das weibliche Anschlussstück (14) eine Wand umfasst, die eine radial innere Fläche (40a) umfasst, welche eine in Bezug auf die X-Achse in Umfangsrichtung geneigte Schräge (40b) aufweist.

9. Vorrichtung (10) nach Anspruch 9, wobei die radial innere Fläche (40a) ein erstes Umfangsende, das sich auf einem Umfang (C3) mit Durchmesser D3 befindet, und ein zweites gegenüberliegendes Umfangsende umfasst, das sich auf einem Umfang (C4) mit Durchmesser D4 befindet, der größer ist als D3, wobei die Wand eine seitliche Anschlagfläche umfasst, die sich auf der Seite des ersten Umfangsendes befindet.

10. Vorrichtung nach einem der vorstehenden Ansprüche, wobei die Fenster (32) nicht gleichmäßig um die X-Achse verteilt sind, um dem weiblichen Anschlussstück (14) ein Verwechslungssicherheitsmerkmal zu verleihen.

11. Vorrichtung (10) nach einem der vorstehenden Ansprüche, wobei das männliche Anschlussstück (12) einstückig gebildet ist, das weibliche Anschlussstück (14) einstückig gebildet ist und die Vorrichtung aus dem männlichen Anschlussstück, dem weiblichen Anschlussstück und der mindestens einen Dichtung (16) besteht.

12. Vorrichtung (10) nach einem der vorstehenden Ansprüche, wobei das männliche Anschlussstück (12) eine ringförmige Nut (18) zur Aufnahme der ringförmigen Dichtung umfasst, wobei diese ringförmige Nut in einem ringförmigen Wulst (20) gebildet ist, der sich um die X-Achse erstreckt und der im Querschnitt eine konvex gerundete Form aufweist, die dem männlichen Anschlussstück eine Wälzfähigkeit im weiblichen Anschlussstück (14) verleiht.

## Claims

1. A fluid connection device (10), comprising:
- a male connector (12) and a female connector (14), which are configured to be fitted one inside the other along an axis X so as to produce a fluid connection,
- at least one annular seal (16) carried by one of the connectors and configured to cooperate with the other of the connectors in order to ensure a seal between the connectors,
the connections being configured to be fastened to each other by resilient snap-fastening and to retain after fastening at least one degree of freedom with respect to each other,
the male connector (12) comprising members (24) configured to cooperate by bayonet effect with complementary elements (26) of the female connector (14),
the female connector (14) comprises an opening (28) for engaging the male connector (12), this opening being delimited by a peripheral annular edge (14d) comprising axial windows (32) for engaging the members (24) of the male connector (12) by axial translation, each window (32) is connected to a first circumferential slot (34) adapted to receive the corresponding member (24) during a circumferential movement by bayonet of the male connector (12) in the female connector (14),
**characterised in that** the same members (24) of the male connector (12) cooperate by resilient snap-fastening with the same members (25) of the female connector (14) so that the connectors are fastened together by a double fastening by resilient snap-fastening and by bayonet, the resilient snap-fastening being configured to be irreversible without deterioration so that, after fastening, the device cannot be dismantled without deterioration.

2. The device (10) according to claim 1, wherein the connectors (12, 14) are configured to retain after fastening at least one degree of freedom selected from translation along the axis X over a predetermined distance, rotation around the axis X over a predetermined angle, and articulation with respect to a point located on the axis X and with a predetermined angular displacement.

3. The device (10) according to any of the preceding claims, wherein the members (24) project from an outer annular surface (22) of the male connector (12).

4. The device (10) according to claim 3, wherein each of the members (24) comprises a radially outer surface (24a) comprising a slope (24b) inclined in the circumferential direction with respect to the axis X.

5. The device (10) according to claim 4, wherein the radially outer surface (24a) comprises a first circumferential end located on a circumference (C1) of diameter D1 and a opposite second circumferential end located on a circumference (C2) of diameter D2, which is smaller than D1, each of the members (24) comprising an abutment side surface (24c) located on the side of said first circumferential end.

6. The device (10) according to any of claims 3 to 5, wherein the male connector (12) further comprises pads (26) projecting from its outer annular surface (22) and configured to slidingly cooperate with an inner annular surface (14b) of the female connector (14).

7. The device (10) according to any of the preceding claims, wherein the first slot (34) is connected to a second axial slot (36) to ensure a degree of freedom in axial translation of the male connector (12) into the female connector (14).

8. The device (10) according to any of the preceding claims, wherein, in the area of connection of each window (32) to the corresponding circumferential slot (34), the female connector (14) comprises a wall comprising a radially inner surface (40a) having a slope (40b) inclined in the circumferential direction with respect to the axis X.

9. The device (10) according to claim 9, wherein the radially inner surface (40a) comprises a first circumferential end located on a circumference (C3) of diameter D3 and a opposite second circumferential end located on a circumference (C4) of diameter D4, which is greater than D3, the wall comprising an abutment side surface located on the side of said first circumferential end.

10. The device according to any of the preceding claims, wherein the windows (32) are non-regularly distributed around said axis X to provide the female connector (14) with a keying property.

11. The device (10) according to any of the preceding claims, wherein the male connector (12) is formed in a single piece, the female connector (14) is formed in a single piece, and the device consists of the male connector, the female connector and said at least one seal (16).

12. The device (10) according to any of the preceding claims, wherein the male connector (12) comprises an annular groove (18) for housing the annular seal, said annular groove being formed in an annular boss (20) which extends around the axis X and which has a convexly rounded shape in cross-section providing the male connector with a swivelling ability within the female connector (14).
